(19) Europäisches Patentamt
European Patent Office
Office européen des brevets

(11) Veröffentlichungsnummer: **0 157 318**
**B1**

(12) # EUROPÄISCHE PATENTSCHRIFT

(45) Veröffentlichungstag der Patentschrift: **30.08.89**

(51) Int. Cl.⁴: **C 07 F 7/18**, C 07 F 7/08, C 08 G 77/06, C 08 G 77/18

(21) Anmeldenummer: **85103432.2**

(22) Anmeldetag: **22.03.85**

(54) **Verfahren zur Herstellung von Siliconharzvorprodukten.**

(30) Priorität: **04.04.84 DE 3412648**

(43) Veröffentlichungstag der Anmeldung: **09.10.85 Patentblatt 85/41**

(45) Bekanntmachung des Hinweises auf die Patenterteilung: **30.08.89 Patentblatt 89/35**

(84) Benannte Vertragsstaaten: **BE DE FR GB IT NL**

(56) Entgegenhaltungen:
**EP-A- 0 006 432**
**DE-A- 1 620 933**
**DE-A- 2 806 036**
**GB-A- 2 052 538**
**US-A- 3 439 013**
**Die Akte enthält technische Angaben, die nach dem Eingang der Anmeldung eingereicht wurden und die nicht in dieser Patentschrift enthalten sind.**

(73) Patentinhaber: **Th. Goldschmidt AG**
**Goldschmidtstrasse 100 Postfach 101461**
**D-4300 Essen 1 (DE)**

(72) Erfinder: **Koerner, Götz, Dr.**
**Kantorie 126**
**D-4300 Essen (DE)**
Erfinder: **Rau, Harald**
**Schmettaustrasse 11**
**D-4300 Essen (DE)**
Erfinder: **Schamberg, Eckehard, Dr.**
**Grotehang 6**
**D-4300 Essen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 157 318 B1

Jouve, 18, rue St-Denis, 75001 Paris, France

## Beschreibung

Die Erfindung betrifft ein Verfahren zur Herstellung von Siliconharzvorprodukten der allgemeinen Formel

$$\begin{array}{c} R^2_a Si(OR^1)_b \\ | \\ O_{\frac{4-(a+b)}{2}} \end{array}$$

worin

$R^1$ eine niedere Alkylgruppe mit 1 bis 4 C-Atomen,
$R^2$ eine Phenyl- und/oder Alkylgruppe bedeuten,
a = 0,8 bis 1,7 und
b $\leqq$ 1 sind,

durch Alkoholyse/Hydrolyse und partielle Kondensation von Organochlorsilanen mit Alkohol/Wasser in Gegenwart von Organosiloxanen.

In den deutschen Offenlegungsschriften 32 14 984 und 32 14 985 werden Verfahren zur Herstellung von Siliconharzen beschrieben, die unter anderem dadurch gekennzeichnet sind, daß man Alkoxysiloxane der vorgenannten Formel, worin $R^1$ und $R^2$ die bereits angegebene Bedeutung haben und a = 1,0 bis 1,2 und b = 0,5 bis 1 sind, verwendet, mit der Maßgabe, daß mindestens 50 Gew.-% der Formel $[R^2Si(OR^1)O]_n$, n = 3 bis 8, entsprechen. Die verwendeten Alkoxysiloxane sind überwiegend niedermolekular und entstehen aus den entsprechenden Chlorsilanen mit Alkohol/Wasser bei Reaktionstemperaturen von 20 bis 60 °C.

In der DE-OS 28 28 990 werden zur Herstellung von hitzehärtbaren Siliconharzen ebenfalls Alkoxysiloxane verwendet, die der oben genannten Formel, worin $R^1$ und $R^2$ die angegebene Bedeutung haben und a = 1 bis 1,5 und b = 0,1 bis 0,7 sind, entsprechen. Die Herstellung der Siloxane bereitet jedoch häufig Schwierigkeiten, und zwar insbesondere dann, wenn die Cohydrolyse/Cokondensation von Phenyltrichlorsilan mit Methyltrichlor-, Dimethyldichlor- und/oder Trimethylchlorsilan erfolgt. Die niedrigen Siedepunkte dieser Silane führen zu hohen Silanverlusten und in betrieblichem Maßstab schwer reproduzierbaren Harzvorprodukten.

Die Endeigenschaften der ausgehärteten Siliconharze oder Siliconkombinationsharze werden durch die organischen Reste $R^2$ sowie durch das $R^2$/Si-Verhältnis ganz wesentlich mitbestimmt. Daher ist es häufig wünschenswert, neben Organotrichlorsilan auch größere Mengen Diorganodichlorsilan sowie gegebenenfalls Triorganochlorsilan mitzuverwenden. Wegen der unterschiedlichen Reaktivitäten der Organotrichlorsilane einerseits und der Diorganodichlor- bzw. Triorganochlorsilane andererseits führt die Cohydrolyse/Cokondensation häufig zu einem schwer reproduzierbaren Gemisch von Alkoxysiloxanen, die zwar im Mittel der vorgenannten Formel entsprechen, jedoch hinsichtlich der Zusammensetzung der einzelnen Moleküle und der Verteilung der Molekulargewichte sehr unterschiedlich sind. Solche Siliconharzvorprodukte führen zu ungünstigen Eigenschaften der daraus hergestellten Siliconharze oder Siliconkombinationsharze, wie z. B. langen Härtungszeiten.

Es ist bekannt, noch härtbare Siliconharze nach ihrer Kondensation zu höhermolekularen Harzgemischen durch Äquilibrierung in ein molekulares Gleichgewicht zu bringen. Solche äquilibrierten Harze besitzen ein höheres mittleres Molekulargewicht als die Siliconharzhydrolysate und weisen eine einheitlichere Molekulargewichtsverteilung als die Harzgemische, die sich bei der Kondensation der Siliconharzhydrolysate bilden, auf (Polym. Prep. Am. Chem. Soc., Div. Polym. Chem., 15 (2), 76 (1974)). Das bedeutet, daß bei dieser Äquilibrierung Spaltung und Neuknüpfung von Si-O-Si-Bindungen erfolgen. Über die Katalyse dieser Reaktionen ist in der Publikation von Shinohara nichts ausgesagt.

Die Spaltung von Organopolysiloxanen mit HCl führt nach der Lehre der DE-OS 31 51 677 bei Ausbeuten bis 99 % zu Chlorsilanen, wenn man die gebildeten Chlorwasserstoffhydrate aus dem Reaktionssystem entfernt. Diese Reaktionen sind aber nur für mono- und bifunktionelle Siloxyeinheiten enthaltende Siloxane beschrieben. Es war zu erwarten, daß diese Reaktionen in Gegenwart trifunktionelle Einheiten enthaltender Siloxane nicht zu dem gewünschten Abbau, sondern zu hochmolekularen bis vergelten Produkten führen.

Aus der US-PS 4 056 492 kann man eine dem Fachmann geläufige Erfahrung ableiten, daß Hydrolysate aus Organotrichlorsilanen in salzsaurer Lösung leicht vergelen, also weder zu einem Abbau gemäß DE-OS 31 51 677 noch zur Einstellung eines molekularen Gleichgewichtes durch Äquilibrierung, wie oben angegeben, führen. Die bekanntlich sehr unterschiedlichen Reaktivitäten der Hydrolysate aus Organotrichlorsilan einerseits sowie Diorganodichlor- und Triorganochlorsilan andererseits sind auch daraus ersichtlich, daß die sauer katalysierte Kondensation solcher Organosilanhydrolysate nach US-PS 4 056 492 nur in Gegenwart trifunktioneller Siloxyeinheiten möglich ist und zu höhermolekularen Produkten führt, die als Harzvorprodukte nicht geeignet sind.

In der DE-OS 28 06 036 ist ein kontinuierliches Verfahren zum Herstellen von Polysiloxanen durch

Umsetzung von Halogensilan mit Alkohol und Wasser in Gegenwart eines Polysiloxans, dessen Zusammensetzung mit der des Endproduktes übereinstimmt oder der Zusammensetzung zumindest nahe kommt, beschrieben. Das mitverwendete Polysiloxan wird bei der Hydrolyse/Kondensation in seiner molekularen Zusammensetzung nicht wesentlich verändert und dient nur als arteigenes Lösungsmittel.

Der Erfindung liegt die Aufgabe zugrunde, ein Verfahren zu finden, mit dem es gelingt, möglichst molekulareinheitliche, niedermolekulare Alkoxysiloxane der vorgenannten Formel herzustellen. Der Begriff der moglichst hohen Molekulareinheitlichkeit definert dabei insbesondere Produkte, deren Individuen bezüglich ihrer Menge einer möglichst engen Gaußschen Verteilung entsprechen. Unter niedermolekular sind insbesondere Produkte zu verstehen, deren mittleres Molekulargewicht einen Wert von 1 500 nicht überschreitet. Insbesondere sollen solche Organoalkoxysiloxane hergestellt werden, die ein $R^2$ /Si-Verhältnis von 0,8 : 1,7 aufweisen. Das Verfahren muß auch auf einfache Weise technisch durchführbar sein und reproduzierbar zu Produkten hoher Qualitätskonstanz führen.

Die Aufgabe wird erfindungsgemäß dadurch gelöst, daß man die Alkoholyse/Hydrolyse sowie die partielle Kondensation in Gegenwart von Organosiloxan(en), dessen (deren) Zusammensetzung von der des Verfahrensproduktes abweicht, durchführt, wobei die Organochlorsilane und das (die) Organosiloxan(e) nach Art und Menge so ausgewählt sind, daß sie hinsichtlich der direkt an das Si-Atom gebundenen Organogruppen $R^2$ summarisch der gewünschten Zusammensetzung des Verfahrensproduktes entsprechen. Die Reaktion wird vorzugsweise bei Temperaturen > 40 °C, insbesondere bei Temperaturen von 50 bis 70 °C, durchgeführt.

Das verwendete Organosiloxan ist vorzugsweise ein z. B. aus Organotrihalogensilan hergestelltes Organoalkoxysiloxan der allgemeinen Formel

$$\begin{array}{l} R^2Si(OR^3)_b \\ \;\;\;| \\ \;\;\;O_{\frac{3-b}{2}} \end{array}$$

worin $R^3 = H$ oder $R^1$ ist und $R^1$, $R^2$ und b die bereits angegebene Bedeutung haben.

Es kann auch ein aus Diorganodihalogensilan hergestelltes Organosiloxan der Formel $R^3O—[(R^2)_2—Si—O—]_nR^3$, worin $R^2$ und $R^3$ die angegebene Bedeutung haben und $n > 1$ ist, sein.

Man kann dem Reaktionsgemisch ferner Hexaorganodisiloxan der allgemeinen Formel $(R^2)_3—Si—O—Si—(R^2)_3$, worin $R^2$ die angegebene Bedeutung hat, oder ein Gemisch der vorgenannten Organosiloxane zusetzen bzw. ein Organosiloxan, das aus einem Gemisch von Silanen unterschiedlicher Funktionalität hergestellt wurde. Hierunter fallen auch Organoalkoxysiloxane, die unter Mitverwendung von Kieselsäureestern oder $SiCl_4$ hergestellt worden sind (in diesem Falle kann $a < 1$ sein).

Als Organohalogensilane können Organotrichlorsilane, Diorganodichlorsilane, Triorganochlorsilane oder deren Gemische verwendet werden. Die Silane sind entsprechend dem erfindungsgemäßen Verfahren dabei nach Art und Menge so auszuwählen, daß sie gemeinsam mit dem Organosiloxan oder dem Organosiloxangemisch die stöchiometrischen Bedingungen zur Bildung der gewünschten Verfahrensprodukte erfüllen. Vorzugsweise werden solche Organosilane verwendet, die bei höheren Temperaturen sieden, insbesondere Phenyltrichlorsilan.

Das Verhältnis von Organochlorsilan zu Organosiloxan, charakterisiert durch das Verhältnis von an Silicium gebundenem Chlor zu Siliciumatome verbrückendem Sauerstoff, ist in weiten Grenzen variierbar. Bereits geringe Mengen Si-Cl reichen zur Spaltung des Organosiloxans aus. Jedoch sollte der Quotient von Si-gebundenem Chlor zu Si-verbrückendem Sauerstoff vorzugsweise $\geq$ 0,1 sein.

Das Organosiloxan kann dem Reaktionsgemisch aus Chlorsilan, Alkohol und Wasser zugesetzt werden. Es kann aber auch zusammen mit einem Teil des Alkohols vorgelegt werden, wobei das Chlorsilan diesem Gemisch zugegeben und dann die Reaktion unter Zusatz von restlichem Alkohol/Wasser fortgesetzt wird.

Die Molekulargewichtsverteilung des Organoalkoxysiloxans hängt u. a. von Reaktionstemperatur und Reaktionszeit ab. Beide Parameter sind in weiten Grenzen variierbar. Die Temperaturen liegen in der Regel zwischen 50 und 70 °C, die Reaktionszeit zwischen 15 Minuten und 2 Stunden. Höhere Reaktionstemperaturen bzw. längere Reaktionszeiten begünstigen die Einstellung des thermodynamisch vorgegebenen Gleichgewichts enger Molekulargewichtsverteilung.

Nach Beendigung der Reaktion kann das Organoalkoxysiloxan gegebenenfalls unter vermindertem Druck durch Destillation gereinigt werden. Dabei werden neben dem überschüssigen Alkohol die flüchtigen Reaktionsprodukte, wie HCl, entfernt.

Es war überraschend, daß unter den Bedingungen der Alkoholyse von Organochlorsilanen mit teilweiser Hydrolyse und Kondensation trotz Anwesenheit von trifunktionellen Organosilanen und/oder Organosiloxyeinheiten keine Kondensation zu höhermolekularen oder gelhaltigen Organosiloxanen erfolgt. Es war erst recht nicht zu erwarten, daß das erfindungsgemäße Verfahren zu einheitlichen, niedermolekularen Organosiloxanen führen würde, die sich zur Herstellung von Siliconharzen oder Siliconkombinationsharzen, im Sinne der deutschen Offenlegungsschriften 28 28 990, 32 14 984 oder 32 14 985, eignen. Es war auch nicht zu erwarten, daß schon geringe Mengen Si-Cl zur vollständigen

Spaltung des Organosiloxans ausreichen, welche zur Bildung der neuen molekulareinheitlichen Organosiloxane erforderlich sind.

Ein wesentlicher Vorteil des erfindungsgemäßen Verfahrens besteht darin, daß bei hohen Reaktionstemperaturen gearbeitet werden kann, die zu erheblichen Silanverlusten führen würden, wenn man die Cohydrolyse/Co- kondensation unter Zusatz der entsprechenden, niedrig siedenden Chlorsilane durchführen würde. Diese hohen Reaktionstemperaturen sind jedoch zur Erzielung molekulareinheitlicher Organoalkoxysiloxane erforderlich.

Ein weiterer Vorteil des erfindungsgemäßen Verfahrens besteht darin, daß gerade solche Organoalkoxysiloxane mitverwendet werden, die der gewünschten molekularen Zusammensetzung nicht entsprechen. Fehlchargen müssen daher nicht verworfen, sondern können in einfacher Weise wieder eingesetzt und entsprechend aufgearbeitet werden.

Ein besonderer Vorteil des erfindungsgemäßen Verfahrens besteht ferner darin, daß die erhaltenen Organoalkoxysiloxane zu deutlich besseren Produkteigenschaften führen als solche Cohydrolysate/Cokondensate, die unter ausschließlicher Verwendung der entsprechenden Chlorsilangemische mit Alkohol/Wasser erhalten werden.

In den folgenden Beispielen werden die erfindungsgemäß hergestellten Organoalkoxysiloxane in ihren physikalischen Eigenschaften beschrieben und mit Produkten verglichen, die nicht erfindungsgemäß hergestellt wurden, aber jeweils der gleichen allgemeinen Formel entsprechen. Darüber hinaus werden die Organoalkoxysiloxane gemäß DE-OS 28 28 990 sowie analog DE-OS 32 14 984 zu Siliconharzen bzw. Siliconkombinationsharzen umgesetzt. Es werden die verbesserten Eigenschaften gezeigt, die man mit den erfindungsgemäß hergestellten Siliconharzvorprodukten erhält.

## Beispiel 1

Herstellung von Harzvorprodukten der Formel

$$(C_6H_5)_{0,5}(CH_3)_{0,5}\underset{\substack{| \\ O_{1,1}}}{Si}(OC_2H_5)_{0,8}$$

### A) Erfindungsgemäße Herstellung

211,5 g (1 Mol) Phenyltrichlorsilan werden langsam mit 160 g (≈ 3,5 Mol) Ethanol versetzt. Nun werden 85,5 g Methylethoxypolysiloxan der Formel $CH_3{-}Si(O)_{1,25}(OC_2H_5)_{0,5}$ zugesetzt und das Reaktionsgemisch auf 60 °C aufgeheizt. Nach 15 Minuten werden 17,1 g (0,95 Mol) Wasser tropfenweise zugesetzt. Nach beendeter Wasserzugabe wird das Reaktionsgemisch bei 12 Torr destilliert.

Das Phenylmethylethoxysiloxan weist folgende analytische Daten auf:

| | |
|---|---|
| Viskosität: | 95 cSt/25 °C |
| Ethoxygehalt: | 27,0 % (theoretisch 28,2 %) |
| Si-Ausbeute: | 100 % der Theorie |

### B) Nichterfindungsgemäße Herstellung

149,5 g (1,0 Mol) Methyltrichlorsilan werden tropfenweise mit 300,0 g (≈ 6,5 Mol) Ethanol versetzt. Nach 15 Minuten wird das Reaktionsgemisch auf 30 °C erwärmt. 211,5 g (1,0 Mol) Phenyltrichlorsilan werden langsam zugegeben. Nach beendeter Silanzugabe werden tropfenweise 39,6 g (2,2 Mol) Wasser zugesetzt. Nach weiteren 15 Minuten wird das Reaktionsprodukt bei 12 Torr destilliert.

Das Phenylmethylethoxysiloxan weist folgende analytische Daten auf:

| | |
|---|---|
| Viskosität: | 450 cSt/25 °C |
| Ethoxygehalt: | 26 % (theoretisch 28,2 %) |
| Si-Ausbeute: | 96 % |

Die Gelchromatogramme der Harzvorprodukte A und B sind in Fig. 1 dargestellt.

### C) Erfindungsgemäße Herstellung

63,8 g des Harzvorproduktes B und 85,5 g Methylethoxypolysiloxan der Formel $CH_3{-}Si(O)_{1,25}(OC_2H_5)_{0,5}$ und 160 g (3,5 Mol) Ethanol werden vorgelegt, dann langsam 211,5 g (1,0 Mol) Phenyltrichlorsilan zugesetzt und auf 60 °C aufgeheizt. Nach 20 Minuten werden tropfenweise 16,7 g (0,93 Mol) Wasser zugesetzt. Das Reaktionsgemisch wird nach beendeter Wasserzugabe bei 12 Torr destilliert.

Das Reaktionsprodukt weist folgende analytische Daten auf :

| | |
|---|---|
| Viskosität : | 98 cSt/25 °C |
| Ethoxygehalt : | 27,5 % (theoretisch 28,2 %) |
| Si-Ausbeute : | 100 % |

Das Gelchromatogramm des Harzvorproduktes C ist mit dem von A identisch. Dieses Beispiel zeigt somit, daß das erfindungsgemäße Verfahren die Aufarbeitung eines Harzvorproduktes (B) mit unerwünschter Zusammensetzung in ein dem Harzvorprodukt A entsprechenden Produkt ermöglicht.

D) Herstellung von Siliconkombinationsharz gemäß DE-OS 32 14 984 (nichterfindungsgemäße Weiterverarbeitung)

99,5 g (0,25 Mol) Bis(2,2-dihydroxymethyl)butylterephthalat und 150 g (0,9 Mol $SiOC_2H_5$) Harzvorprodukt A werden mit 30 g Ethylglykolacetat und 5 g einer 10 %igen Lösung von Tetrabutyltitanat in Butylacetat versetzt und 30 Minuten bei 135 °C unter Abdestillation von 25 g Ethanol (Umsatz : 60 %) umgesetzt. Das Produkt wird abgekühlt und besitzt eine Viskosität von 1 150 cSt/25 °C und einen Festkörpergehalt von 80 %, der mit Ethylglykolacetat eingestellt wird.

Die Harzherstellung wird mit den Harzvorprodukten B und C wiederholt. Dabei weist das mit Harzvorprodukt B hergestellte Harz eine Viskosität von 1 900 cSt/25 °C und 80 % Festkörper auf, während das mit Harzvorprodukt C hergestellte Harz eine Viskosität von 1 100 cSt/25 °C bei gleichem Festkörper aufweist.

E) Anwendungstechnische Prüfung

Je 100 g des nach D hergestellten Harzes werden mit 0,5 g Härtungskatalysator gemäß DE-OS 32 14 984, Beispiel 1, vermischt und mit 80 g $TiO_2$ pigmentiert. Die Lacke werden auf Aluminiumprüfbleche (Bonder 1401 AL) aufgebracht und nach einer Ablüftzeit von 10 Minuten bei 270 °C 10 Minuten lang gehärtet. Die Schichtdicke beträgt 30 bis 35 µm.

Die Prüfung ergibt folgende Werte :

| | A | B | C |
|---|---|---|---|
| Härte bei 20°C (nach Wolff. Wilborn) | 3H | 3H | 3H |
| Härte bei 150°C | 3H | H | 3H |
| Gilbung (b-Werte nach Hunter Lab) | | | |
| Nullprobe | - 1,2 | - 1,2 | - 1,2 |
| nach 3 Stunden/300°C | + 0,8 | + 0,7 | + 0,8 |
| Detergentienfestigkeit (3 Stunden Einhängen der Prüfbleche in 3,0 %ige Waschmittellösung) | kein Angriff | leichter Angriff Glanzverlust | kein Angriff |
| Glanzhaltung (%/60°C) | | | |
| Nullprobe | 95 | 95 | 95 |
| 24 Stunden/250°C | 90 | 45 | 90 |

Thermoplastizität, Detergentienfestigkeit und Glanzhaltung sind mit den Harzvorprodukten A und C deutlich besser als mit Harzvorprodukt B. Besonders schlecht schneidet Harzvorprodukt B in der Haftung nach thermischer Belastung ab.

Haftung nach Gitterschnitt gemäß DIN 53 151 :

| | | | |
|---|---|---|---|
| Nullprobe | GT0 | GT0 | GT0 |
| 24 Stunden/250°C | GT0 | GT5 | GT0 |

Beispiel 2

Herstellung eines Harzvorproduktes der Formel

$$(C_6H_5)_{0,67}(CH_3)_{0,67}\underset{\overset{|}{O_{1,26}}}{Si}(OC_2H_5)_{0,14}$$

A) Erfindungsgemäße Herstellung

Zu 211,5 g (1 Mol) Phenyltrichlorsilan werden 160 g (≈ 3,3 Mol) Ethanol gegeben. Eine Mischung aus 34,9 g Polydimethylsiloxan der Formel $H-[O-Si(CH_3)_2-]_{65}OH$ und 1,62 g (0,01 Mol) Hexamethyldisiloxan werden zugesetzt und das Ganze bei 35 °C 15 Minuten gerührt. Anschließend wird auf 70 °C aufgeheizt, 10 Minuten weitergerührt und anschließend tropfenweise 25,0 g (1,39 Mol) Wasser zugegeben. Die Reaktionslösung wird dann bei 120 bis 130 °C unter Normaldruck ausdestilliert. Während des Abkühlens wird Xylol zugegeben und ein Feststoffgehalt von 80 % eingestellt.

Das Phenylmethylethoxysiloxan hat folgende analytische Daten :

| | |
|---|---|
| Ethoxygehalt : | 5,5 % (Theorie : 5.4 %) |
| Si-Ausbeute : | 100 % der Theorie |

B) Nichterfindungsgemäße Herstellung

Zu 211,5 g (1 Mol) Phenyltrichlorsilan werden 160 g (≈ 3,3 Mol) Ethanol und 33,8 g (1,87 Mol) Wasser gegeben. Unter Kühlen wird ein Gemisch aus 60,2 g (0,47 Mol) Dimethyldichlorsilan und 2,17 g (0,02 Mol) Trimethylchlorsilan langsam zugetropft. Nach 2 Stunden wird die Reaktionslösung bei 12 Torr ausdestilliert.

Das Phenylmethylethoxysiloxan hat folgende analytische Daten :

| | |
|---|---|
| Ethoxygehalt : | 5,4 % (Theorie : 5,4 %) |
| Si-Ausbeute : | 96 % der Theorie |

Die Gelchromatogramme der Harzvorprodukte A und B sind in Fig. 2 dargestellt.

C) Nichterfindungsgemäße Umsetzung der Harzvorprodukte zu Siliconharz entsprechend DE-PS 28 28 990

1000,0 g Harzvorprodukt A (entsprechend 1 Mol $Si-OC_2H_5$) werden mit 6,8 g (0,11 Mol) Ethylenglykol und 34,8 g (0,26 Mol) Trimethylolpropan in einer Destillationsapparatur vorgelegt, mit 0,2 g Butyltitanat und 1 000 g Xylol versetzt. Das Gemisch wird unter Rühren aufgeheizt. Bei 130 °C beginnt die Abspaltung von Ethanol, das im Gemisch mit Xylol abdestilliert. Nach 20 Minuten ist ein Umsatz von 55 % erreicht, was sich aus der Menge des abgespaltenen Alkohols (25 g) ergibt. Das Reaktionsprodukt wird abgekühlt und mit Xylol auf einen Feststoffgehalt von 50 % eingestellt. Die Viskosität beträgt 280 cSt/25 °C.

Die Umsetzung wird mit dem nicht erfindungsgemäß hergestellten Harzvorprodukt (B) wiederholt. Nach 30 Minuten Reaktionszeit unter ständigem Abdestillieren von Ethanol und Xylol ist ein Umsatz von 35 % und eine Viskosität von 45 cSt/25 °C erreicht. Es bilden sich bereits Gelteilchen, so daß die Reaktion abgebrochen werden muß.

D) Die beiden Siliconharze werden wie folgt geprüft :

a) Die Harze werden mit einer Rakel auf entfettetes Stahlblech aufgetragen. Nach Trocknung an der Luft wird die Härte der Oberflächen gemessen und anschließend werden die Bleche 48 Stunden den Bedingungen eines Salzsprühgerätes ausgesetzt. Die Schichtdicke beträgt 25 bis 30 µm.

b) Es werden rußpigmentierte Lacke hergestellt, die auf gesandstrahltes Stahlblech aufgespritzt werden, Schichtdicke 20 bis 25 µm. Die Bleche werden 1 Stunde lang bei 150 °C, 300 °C sowie 450 °C thermisch belastet. Anschließend erfolgt 96 Stunden Salzsprühtest nach DIN 50 021.

Die Ergebnisse sind in der folgenden Tabelle zusammengefaßt, wobei ein Ergebnis im Salzsprühtest von 0 % keine Unterrostung und ein Ergebnis von 100 % totale Verrostung bedeuten. Die Härte wird als Bleistifthärte nach Wolff-Wilborn gemessen.

| | A | B |
|---|---|---|
| Härte nach Trocknung | HB | 3B |
| 48 Std. Salzsprühtest nach Lufttrocknung | 30 % | 100 % |
| 96 Std. Salzsprühtest | | |
| nach 1/2 Std. bei 120°C | 25 % | 90 % |
| nach 1/2 Std. bei 300°C | 10 % | 85 % |
| nach 1/2 Std. bei 400°C | 30 % | 100 % |

Die Ergebnisse zeigen, daß das mit Harzvorprodukt A (erfindungsgemäß) hergestellte Siliconharz eine höhere Härte und einen besseren Korrosionsschutz nach Lufttrocknung aufweist und auch nach thermischer Belastung einen erheblich verbesserten Korrosionsschutz bietet, verglichen mit dem Siliconharz, das mit Harzvorprodukt B (nicht erfindungsgemäß) hergestellt wurde.

**Patentansprüche**

1. Verfahren zur Herstellung von Siliconharzvorprodukten der allgemeinen Formel

$$R^2_a Si(OR^1)_b O_{\frac{4-(a+b)}{2}}$$

worin
$R^1$ eine niedere Alkylgruppe mit 1 bis 4 C-Atomen,
$R^2$ eine Phenyl- und/oder Alkylgruppe bedeuten,
$a = 0{,}8$ bis 1,7 und
$b \leqq 1$ sind,
durch Alkoholyse/Hydrolyse und partielle Kondensation von Organochlorsilanen mit Alkohol/Wasser in Gegenwart von Organosiloxanen, dadurch gekennzeichnet, daß man die Alkoholyse/Hydrolyse sowie die partielle Kondensation in Gegenwart von Organosiloxan(en), dessen (deren) Zusammensetzung von der des Verfahrensproduktes abweicht, durchführt, wobei die Organochlorsilane und das (die) Organosiloxan(e) nach Art und Menge so ausgewählt sind, daß sie hinsichtlich der direkt an das Si-Atom gebundenen Organogruppen $R^2$ summarisch der gewünschten Zusammensetzung des Verfahrensproduktes entsprechen.

2. Verfahren nach Anspruch 1, dadurch gekennzeichnet, daß man die Reaktion bei Temperaturen > 40 °C, insbesondere 50 bis 70 °C, durchführt.

3. Verfahren nach Anspruch 1 oder 2, dadurch gekennzeichnet, daß man die Alkoholyse/Hydrolyse sowie die partielle Kondensation in Gegenwart eines Organosiloxans der Formel

$$R^2 Si(OR^3)_b O_{\frac{3-b}{2}}$$

worin $R^3$ = H oder $R^1$ ist und $R^1$, $R^2$ und b die oben angegebene Bedeutung haben, durchführt.

4. Verfahren nach Anspruch 1 oder 2, dadurch gekennzeichnet, daß man die Alkoholyse/Hydrolyse sowie die partielle Kondensation in Gegenwart eines Organosiloxans der Formel

$$R^3O\text{—}[(R^2)_2\text{—}Si\text{—}O\text{—}]_nR^3$$

worin $R^2$ und $R^3$ die oben angegebene Bedeutung haben und $n > 1$ ist, durchführt.

5. Verfahren nach Anspruch 1 oder 2, dadurch gekennzeichnet, daß man die Alkoholyse/Hydrolyse sowie die partielle Kondensation in Gegenwart eines Organosiloxans der Formel

$$(R^2)_3-Si-O-Si-(R^2)_3$$

worin $R^2$ die oben angegebene Bedeutung hat, durchführt.

6. Verfahren nach einem oder mehreren der vorhergehenden Ansprüche, dadurch gekennzeichnet, daß man die Alkoholyse/Hydrolyse sowie die partielle Kondensation in Gegenwart eines Gemisches der in den Ansprüchen 3, 4 und/oder 5 genannten Organosiloxane durchführt.

7. Verfahren nach einem oder mehreren der vorhergehenden Ansprüche, dadurch gekennzeichnet, daß das Verhältnis von Si-Cl- zu SiOSi-Gruppen $\geqq 0{,}1$ ist.

8. Verfahren nach einem oder mehreren der vorhergehenden Ansprüche, dadurch gekennzeichnet, daß man das Organosiloxan dem Reaktionsgemisch aus Chlorsilan, Alkohol und Wasser zugibt.

9. Verfahren nach einem oder mehreren der Ansprüche 1 bis 7, dadurch gekennzeichnet, daß man das Organosiloxan mit einem Teil des Alkohols vorlegt, das Chlorsilan zugibt und dann den restlichen Alkohol sowie das Wasser zusetzt.

## Claims

1. Process for the preparation of silicone resin intermediates of the general formula

$$\begin{array}{c} R^2_aSi(OR^1)_b \\ | \\ O_{\frac{4-(a+b)}{2}} \end{array}$$

wherein

$R^1$ denotes a lower alkyl group having 1 to 4 C atoms,

$R^2$ denotes a phenyl and/or alkyl group,

a is from 0.8 to 1.7 and

b is $\leqq 1$,

by alcoholysis/hydrolysis and partial condensation of organochlorosilanes with alcohol/water in the presence of organosiloxanes, characterized in that the alcoholysis/hydrolysis and the partial condensation are carried out in the presence of organosiloxane(s) whose composition differs from that of the product of the process, the organochlorosilanes and the organosiloxane(s) being selected, according to type and amount, in such a way that, with regard to the organic groups $R^2$ directly bonded to the Si atom, they correspond overall to the desired composition of the product of the process.

2. Process according to Claim 1, characterized in that the reaction is carried out at temperatures $> 40\,^{\circ}C$, in particular from 50 to 70 °C.

3. Process according to Claim 1 or 2, characterized in that the alcoholysis/hydrolysis and the partial condensation are carried out in the presence of an organosiloxane of the formula

$$\begin{array}{c} R^2Si(OR^3)_b \\ | \\ O_{\frac{3-b}{2}} \end{array}$$

wherein $R^3$ is H or $R^1$ and $R^1$, $R^2$ and b have the abovementioned meaning.

4. Process according to Claim 1 or 2, characterized in that the alcoholysis/hydrolysis and the partial condensation are carried out in the presence of an organosiloxane of the formula

$$R^3O-[(R^2)_2-Si-O-]_nR^3$$

wherein $R^2$ and $R^3$ have the abovementioned meaning and $n$ is $> 1$.

5. Process according to Claim 1 or 2, characterized in that the alcoholysis/hydrolysis and the partial condensation are carried out in the presence of an organosiloxane of the formula

$$(R^2)_3-Si-O-Si-(R^2)_3$$

wherein $R^2$ has the abovementioned meaning.

6. Process according to one or more of the preceding claims, characterized in that the alcoholysis/hydrolysis and the partial condensation are carried out in the presence of a mixture of the organosiloxanes stated in Claims 3, 4 and/or 5.

7. Process according to one or more of the preceding claims, characterized in that the ratio of Si-Cl to SiOSi groups is $\geqq 0.1$.

8. Process according to one or more of the preceding claims, characterized in that the organosiloxane is added to the reaction mixture consisting of chlorosilane, alcohol and water.

9. Process according to one or more of Claims 1 to 7, characterized in that the organosiloxane is initially taken with some of the alcohol, the chlorosilane is added and the remaining alcohol and the water are then added.

**Revendications**

1. Procédé pour la préparation de précurseurs de résines de silicone, de formule générale

$$\begin{array}{l} R^2_a Si(OR^1)_b \\ \quad | \\ \quad O_{\frac{4-(a+b)}{2}} \end{array}$$

dans laquelle
$R^1$ est un groupe alkyle inférieur ayant de 1 à 4 atomes de carbone,
$R^2$ est un groupe phényle et/ou alkyle,
$a = 0{,}8$ à $1{,}7$ et
$b \leqq 1$,
par alcoolyse/hydrolyse et condensation partielle d'organochlorosilanes à l'aide d'alcool/eau en présence d'organosiloxanes, caractérisé en ce qu'on met en oeuvre l'alcoolyse/hydrolyse, de même que la condensation partielle, en présence d'organosiloxane(s), dont la composition s'écarte de celle du produit du procédé, les organochlorosilanes et le ou les organosiloxanes étant sélectionnés, pour ce qui est de leur quantité et de leur nature, de façon que, pour ce qui est des groupes organiques $R^2$ directement liés à l'atome de Si, ils correspondent globalement à la composition souhaitée du produit du procédé.

2. Procédé selon la revendication 1, caractérisé en ce qu'on met en œuvre la réaction à des températures $> 40$ °C, en particulier comprises entre 50 et 70 °C.

3. Procédé selon la revendication 1 ou 2, caractérisé en ce qu'on met en oeuvre l'alcoolyse/hydrolyse, de même que la condensation partielle, en présence d'un organosiloxane de formule

$$\begin{array}{l} R^2 Si(OR^3)_b \\ \quad | \\ \quad O_{\frac{3-b}{2}} \end{array}$$

dans laquelle $R^3 = H$ ou est identique à $R^1$, et $R^1$, $R^2$ et b ont les significations données ci-dessus.

4. Procédé selon la revendication 1 ou 2, caractérisé en ce qu'on met en oeuvre l'alcoolyse/hydrolyse, de même que la condensation partielle, en présence d'un organosiloxane de formule

$$R_3O{-}[(R^2)_2{-}Si{-}O{-}]_nR^3$$

dans laquelle $R^2$ et $R^3$ ont les significations données ci-dessus, et $n > 1$.

5. Procédé selon la revendication 1 ou 2, caractérisé en ce qu'on met en oeuvre l'alcoolyse/hydrolyse, de même que la condensation partielle, en présence d'un organosiloxane de formule

$$(R^2)_3{-}Si{-}O{-}Si{-}(R^2)_3$$

dans laquelle $R^2$ a les significations données ci-dessus.

6. Procédé selon l'une ou plusieurs des revendications précédentes, caractérisé en ce qu'on met en œuvre l'alcoolyse/hydrolyse, de même que la condensation partielle, en présence d'un mélange des organosiloxanes mentionnés dans les revendications 3, 4 et/ou 5.

7. Procédé selon l'une ou plusieurs des revendications précédentes, caractérisé en ce que le rapport des groupes Si-Cl- aux groupes SiOSi- est $\geqq 0{,}1$.

8. Procédé selon l'une ou plusieurs des revendications précédentes, caractérisé en ce qu'on ajoute l'organosiloxane au mélange réactionnel constitué de chlorosilane, d'alcool et d'eau.

9. Procédé selon l'une ou plusieurs des revendications 1 à 7, caractérisé en ce qu'on met en présence l'organosiloxane et une partie de l'alcool, on ajoute le chlorosilane puis on ajoute l'alcool restant, de même que l'eau.

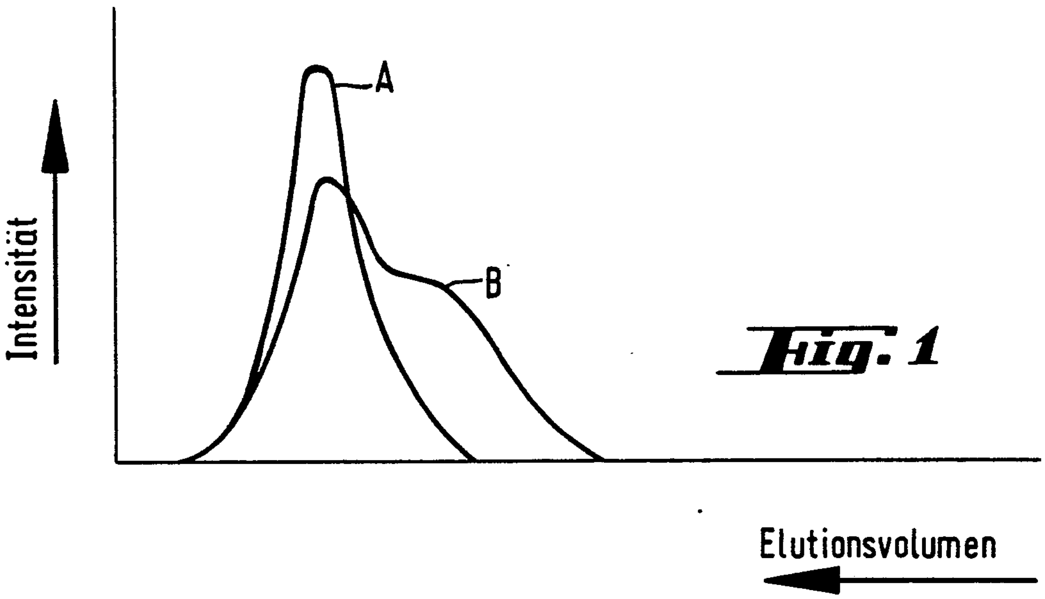
A
B
Intensität
Elutionsvolumen

Fig. 1

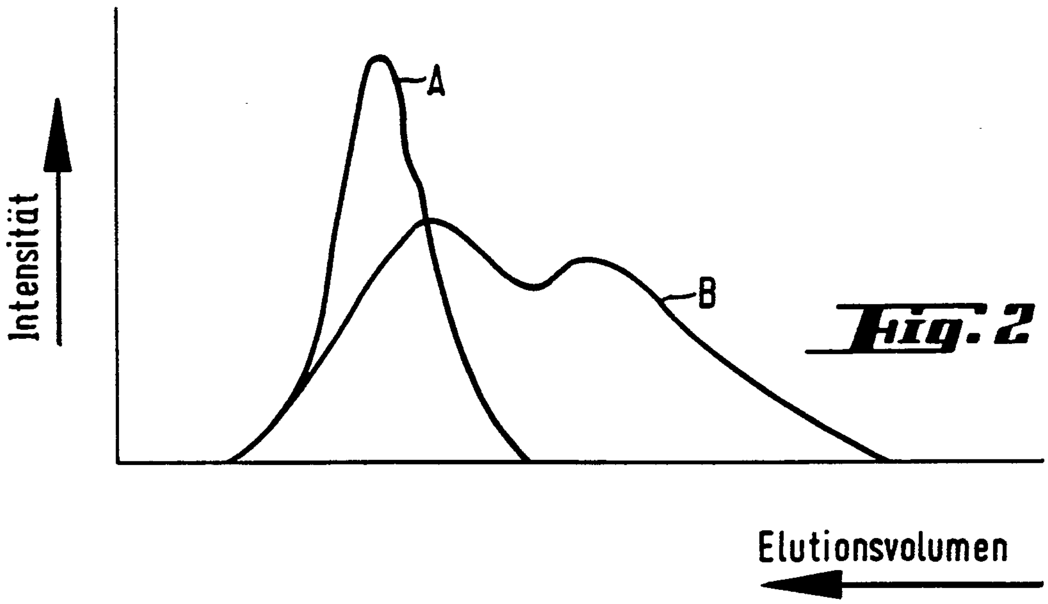
A
B
Intensität
Elutionsvolumen

Fig. 2